**Europäisches Patentamt**

**European Patent Office**

**Office européen des brevets**

(19)

(11) Numéro de publication : **0 449 730 A1**

## (12) DEMANDE DE BREVET EUROPEEN

(21) Numéro de dépôt : **91400832.1**

(22) Date de dépôt : **27.03.91**

(51) Int. Cl.⁵ : $G05B\ 19/05$

(30) Priorité : **30.03.90 FR 9004125**

(43) Date de publication de la demande :
**02.10.91 Bulletin 91/40**

(84) Etats contractants désignés :
**AT BE CH DE DK ES FR GB GR IT LI LU NL SE**

(71) Demandeur : **SOLLAC**
**Immeuble Elysées La Défense, 29 Le Parvis**
**F-92800 PUTEAUX (FR)**

(72) Inventeur : **Atze, Henri Daniel**
**22 Quai de la Canardière**
**F-60500 Chantilly (FR)**

(74) Mandataire : **Obolensky, Michel et al**
**c/o CABINET LAVOIX 2, place d'Estienne**
**d'Orves**
**F-75441 Paris Cédex 09 (FR)**

(54) Dispositif d'aide au diagnostic de pannes notamment pour automates de commande de processus industriels.

(57)  Dispositif d'aide au diagnostic de pannes d'une machine pilotée par un automate programmable de commande de processus industriel, caractérisé en ce qu'il comporte en combinaison des moyens (3) de stockage d'informations correspondant à des procédures de dépannage de la machine, des moyens pour transmettre au dispositif des informations correspondant à l'état des divers organes de la machine à examiner, des moyens (10) de comparaison des informations d'état des divers organes de la machine aux informations correspondant aux pannes ou anomalies de la machine et des moyens (12) d'affichage de la panne ou anomalie de la machine en cas de coincidence entre une information d'état d'un organe de la machine et une information de panne de l'organe correspondant emmagasinée dans lesdits moyens de stockage (3).

EP 0 449 730 A1

FIG. 2

La présente invention est relative à la détection de pannes ou d'anomalies de fonctionnement de machines pilotées par des automates programmables de commande de processus industriels, notamment d'automates utilisés dans des installations de galvanisation de tôles en continu et se rapporte plus particulièrement à un dispositif d'aide à la détection rapide de telles pannes ou anomalies.

La recherche et la détermination de la nature des pannes dans l'environnement d'un automate de commande d'un processus industriel sont généralement assurées par un technicien qui dispose d'une part d'un appareil d'investigation qu'il branche sur une prise de test de l'automate reliée aux points essentiels de l'automate auxquels des anomalies risquent d'apparaître.

Le technicien dispose en outre d'un document d'entretien des automatismes pilotés par l'automate établi par le constructeur et qui contient une liste complète du programme contenu dans l'automate.

Par conséquent, lorsque le technicien se trouve devant une anomalie de fonctionnement du processus, il doit consulter à la fois la liste contenant le progrmme de l'automate et interroger l'automate sur l'état des variables constituant les équations dudit programme pour déterminer l'origine de la panne puis faire appel à ses connaissances et à son expérience pour effectuer le dépannage.

Une telle opération est relativement longue et complexe et elle exige de la part du technicien une connaissance assez poussée du matériel qu'il examine et par conséquent une compétence technique importante.

Par ailleurs, étant donné que certaines pannes sont répétitives, elles nécessitent de la part du technicien une répétition des opérations de recherche de la panne ce qui lui prend beaucoup de temps.

L'invention vise à remédier aux inconvénients précités de la technique antérieure en créant un dispositif d'aide au diagnostic de pannes dans des machines pilotées par des automates de commande de processus industriels qui tout en état d'une construction simple soit d'une utilisation pratique, rapide et efficace.

Elle a donc pour objet un dispositif d'aide au diagnostic de pannes d'une machine pilotée par un automate de commande de processus industriel, caractérisé en ce qu'il comporte en combinaison des moyens de stockage d'informations correspondant à des procédures de dépannage de la machine, des moyens pour transmettre au dispositif des informations correspondant à l'état des divers organes de la machine à examiner, des moyens de comparaison des informations d'état des divers organes de la machine aux informations correspondant aux pannes ou anomalies de la machine et des moyens d'affichage de la panne ou anomalie de la machine en cas de coincidence entre une information d'état d'un organe de la machine et une information de panne de l'organe correspondant emmagasinée dans lesdits moyens de stockage.

L'invention sera mieux comprise à l'aide de la description qui va suivre, donnée uniquement à titre d'exemple et faite en se référant aux dessins annexés, sur lesquels :

– la Fig.1 est un schéma du dispositif d'aide au diagnostic suivant l'invention connecté à un automate à contrôler;

– la Fig.2 est un schéma synoptique du dispositif d'aide au diagnostic suivant l'invention; et

– la Fig.3 est un schéma électrique montrant la construction d'un adaptateur pour automate qu'il est nécessaire de connecter entre le dipositif suivant l'invention et certains automates.

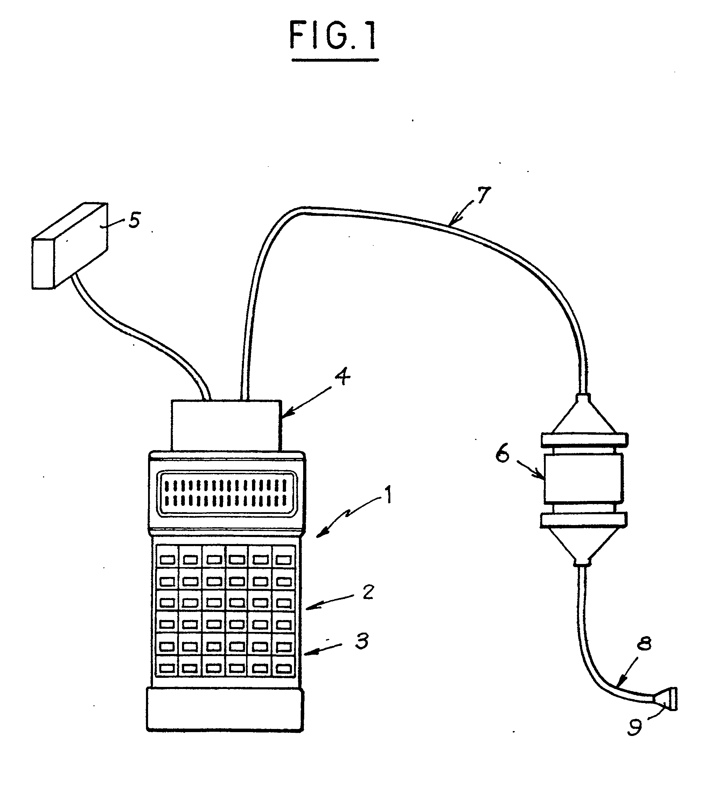

Sur la Fig.1, on a représenté un dispositif d'aide au diagnostic suivant l'invention qui est principalement constitué par une calculatrice de poche 1 de type courant à blocs mémoires programmables 2, 3 enfichés sur le côté de la machine.

La machine 1 est connectée par l'intermédiaire d'un module série 4 d'une part à un adaptateur 5 d'alimentation à partir du secteur et d'autre part lorsque cela est nécessaire à un module 6 adaptateur pour automates dont les bornes de test se trouent à des tensions différentes des bornes d'entrée/sortie de la machine 1.

Le module adaptateur 6 est relié d'une part au module série 4 associé à la machine par un câble 7 de liaison série et d'autre part à un automate non représenté par un cable 8 de liaison portant un connecteur 9 de type adapté au connecteur de test de l'automate considéré.

L'automate qui est destiné à commander un processus industriel comporte généralement une circuiterie avec carte d'entrée-sortie.

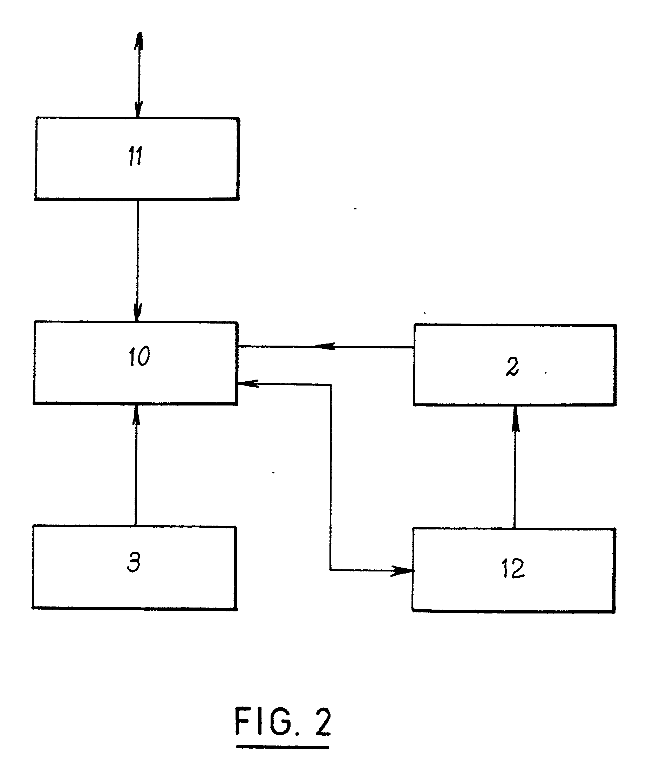

Sur la Fig.2, on a représenté le schéma synoptique du dispositif d'aide au diagnostic suivant l'invention.

Ce dispositif qui met en oeuvre des éléments de la calculatrice de poche 1 de la Fig.1, comporte dans un premier bloc-mémoire programmable 2, un programme de l'ensemble des opérations de test pour assurer la vérification systématique de tous les organes importants d'un automate considéré.

Dans un second bloc-mémoire programmable 3 sont stockées les données relatives à la liste des pannes et anomalies de l'automate à examiner ainsi que les données concernant les opérations à effectuer pour supprimer lesdites anomalies ou pannes.

Les deux blocs-mémoires 2, 3 sont reliés à un circuit comparateur 10 des données contenues dans la liste des pannes et anomalies à celles relatives à l'état instantané de l'automate examiné.

A cet effet, le circuit comparateur 10 est en outre connecté à un circuit d'interface d'entrée-sortie 11 destiné à être connecté à son tour à l'automate à examiner.

Le dispositif comporte enfin un ensemble 12 de clavier et de dispositif d'affichage destiné à permettre à l'opérateur d'introduire dans le dispositif les données relatives à la sélection de la zone de l'automate à tester et de lire les résultats des tests.

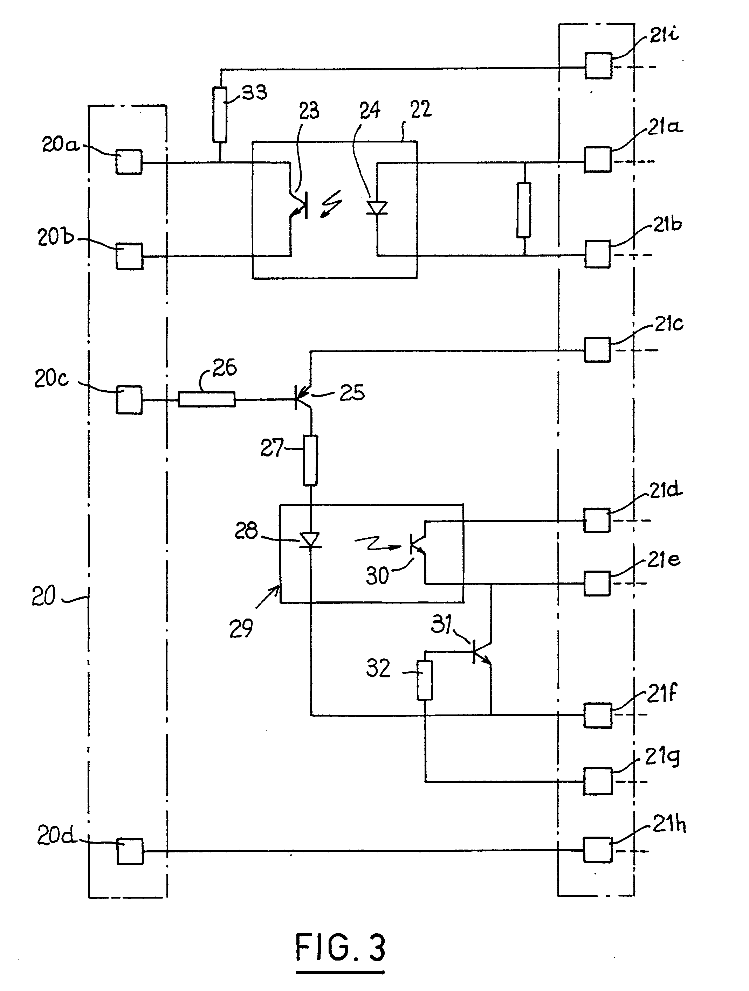

Sur la Fig.3, on a représenté un circuit d'adaptation qui est un exemple de réalisation du module adaptateur 6 intercalé entre le dispositif suivant l'invention et certains automates dont les tensions aux bornes de test ne sont pas adaptées aux niveaux des signaux d'entrée-sortie du dispositif.

Ce circuit comprend un premier ensemble de bornes 20 de liaison avec le dispositif d'aide au diagnostic suivant l'invention et un second ensemble de bornes 21 de liaison avec l'automate.

Entre deux bornes 20a, 20b du premier ensemble 20 et deux bornes 21a,21b du second ensemble 21 est connecté un circuit 22 à couplage opto-électronique comprenant un photo-transistor 23 connecté entre les bornes 20a et 20b et une diode électroluminescente 24 connectée entre les bornes 21a et 21b.

Ce premier groupe de bornes auquel est associé le circuit à couplage opto-électronique 22 est destiné à assurer le transfert des données de mesure de l'automate vers le dispositif d'aide au diagnostic.

Le module de la Fig.3 comporte en outre une borne 20c de l'ensemble 20 connectée à la base d'un transistor PNP 25 par l'intermédiaire d'une résistance 26. L'émetteur du transistor 25 est connecté à une borne 21c de l'ensemble de bornes 21 sur laquelle apparaît une tension d'alimentation.

Le collecteur du transistor 25 est connecté, par l'intermédiaire d'une résistance 27 à l'anode d'une diode électroluminescente 28 d'un aute circuit 29 à couplage opto-électronique. La cathode de la diode 28 est connectée à une borne 21f de l'ensemble de bornes 21.

La diode 28 est associée à un photo-transistor 30 connecté à deux bornes 21d, 21e de l'ensemble de bornes 21, ces bornes étant destinées à transmettre à l'automate des signaux d'interrogation provenant du dispositif d'aide au diagnostic.

La borne 21e de l'ensemble 21 est en outre connectée au collecteur d'un transistor NPN 31 dont l'émetteur est connecté à la borne 21f précitée et dont la base est reliée par l'intermédiaire d'une résistance 32 à une borne 21g.

Le trajet émetteur-collecteur du transistor 31 permet, lors de la mise en conduction du transistor par la présence sur la borne 21g d'une tension indiquant que l'on est connecté à un type particulier d'automate, la mise à la masse de la borne 21e de l'ensemble 21 et par conséquent de l'une des bornes d'interrogation.

Un tel agencement peut être associé à chaque borne nécessitant une adaptation de tension liée à la nature de l'automate auquel est branché le dispositif de l'invention.

Enfin, une borne 20d de l'ensemble 20 est directement connectée à une borne 21h de l'ensemble 21 et ce dernier ensemble comporte une dernière borne 21i connectée à la borne 20a par l'intermédiaire d'une résistance 33.

Le fonctionnement du dispositif qui vient d'être décrit est le suivant.

Le dispositif dans le bloc-mémoire 3 duquel a été stockée la liste des pannes d'un automate à examiner est connecté audit automate soit directement, soit par l'intermédiaire d'un adaptateur 6 décrit en dtail en référence à la Fig.3.

Ensuite, l'opérateur sélectionne à l'aide de l'ensemble 12 et en interaction avec l'ensemble 2 l'automate (si l'ensemble 3 comprend des données relatives à plusieurs automates) puis la zone de l'automate qui doit être soumises au test.

Puis, il commande le déroulement de la série de tests contenus dans l'ensemble 3 qui correspond à la série de tests concernant la zone de l'automate à tester.

Le déroulement du programme de test consiste à appliquer à des points remarquables de l'automate des signaux d'interrogation et d'en recevoir des signaux de réponse correspondant à l'état desdits points remarquables, puis à comparer les signaux de réponse à des informations relatives à la zone correspondante de la liste des pannes et anomalies stockées dans le bloc mémoire 3.

Lorsqu'une information de réponse de l'automate correspond à une information d'anomalie de la liste, le circuit de comparaison 10 commande l'affichage sur l'écran d'affichage de l'ensemble 12, de la panne détectée ainsi que des conditions manquantes au bon fonctionnement.

Ainsi, l'opérateur est informé d'une part sur l'emplacement et la nature de la panne et d'autre part sur les moyens pour y remédier.

Le circuit de comparaison 10 est avantageusement constitué par le microprocesseur de la calculatrice, ledit microprocesseur exécutant également le déroulement du programme stocké dans le bloc-mémoire 2.

En ce qui concerne le circuit adaptateur représenté à la Fig.3, il assure le pilotage d'un interrupteur électronique, de manière à adapter les potentiels aux circuits de deux automates.

Dans un cas, un des automates connecté au circuit adaptateur 6 (Fig.1) a besoin pour fonctionner que le transistor 30 ait son collecteur relié à la masse. Ceci se fait avantageusement par le transistor 31.

Le signal entre dans le circuit adaptateur par les bornes 20c, 20d et sort par les bornes 21d, 21e ou 21d, 21f.

Si l'on n'utilisait pas la commande à transistor précitée, il faudrait disposer soit de deux modules différents soit d'un seul module à interrupteur manuel.

Dans le système qui vient d'être décrit en référence à la Fig.3, il y a basculement automatique en vue du changement de tension de la borne 21e lors de l'alimentation de l'automate connecté à l'adaptateur.

Grâce à l'agencement qui vient d'être décrit en particulier du fait de la présence du circuit d'interface série 4 associé au dispositif d'aide au diagnostic un dialogue direct avec l'automate est rendu possible.

Le dialogue est réalisé avec le microprocesseur 10 de la calculatrice et le logiciel stocké dans le bloc mémoire 2 (Fig.2).

Le système suivant l'invention permet de disposer non seulement de la localisation des pannes et de la nature de celles-ci mais aussi de lire directement sur l'écran du dispositif les mesures à prendre pour supprimer les pannes.

Ceci constitue un progrès considérable par rapport aux systèmes experts connus dans lesquels il est nécessaire de taper des réponses après avoir consulté l'automate manuellement.

Le dispositif qui vient d'ête décrit est susceptible d'applications diverses.

Il peut constituer un perturbographe assurant le test d'une variable quand celle-ci et dans un état désiré.

Il peut assurer l'enregistrement et la vérification d'état de variables.

Il peut être employé pour accroître le potentiel technique des automates existants.

Par l'intermédiaire de son langage spécifique, il peut :

– appliquer la procédure que le technicien expert lui aura transmis et de ce fait :
– solliciter des actions de la part du dépanneur,
– conseiller, informer précisément le dépanneur sur la marche à suivre, sur le défaut détecté,
– est directif dans sa recherche.

Par ailleurs, son emploi ne nécessite pas de connaissances techniques particulières de la part de l'utilisateur.

Le circuit adaptateur de la Fig.3 a été conçu à titre d'exemple pour permettre l'adaptation du dispositif de l'invention à deux types d'automates particuliers tels que les automates ALSPA C300, C350 et April SMC.

On comprendra cependant que d'autres circuits adaptateurs peuvent être conçus en fonction des paramètres d'entrée d'automates de différents types.

**Revendications**

1. Dispositif d'aide au diagnostic de pannes d'une machine pilotée par un automate programmable de commande de processus industriel, caractérisé en ce qu'il comporte en combinaison des moyens (3) de stockage d'informations correspondant à des procédures de dépannage de la machine, des moyens pour transmettre au dispositif des informations correspondant à l'état des divers organes de la machine à examiner, des moyens (10) de comparaison des informations d'état des divers organes de la machines aux informations correspondant aux pannes ou anomalies de la machine et des moyens (12) d'affichage de la panne ou anomalie de la machine en cas de coincidence entre une information d'état d'un organe de la machine et une information de panne de l'organe correspondant emmagasinée dans lesdits moyens de stockage (3).

2. Dispositif d'aide au diagnostic suivant la revendication 1, caractérisé en ce que lesdits moyens (3) de stockage d'informations correspondant aux procédures de dépannage de la machine, contiennent également des informations relatives aux conditions à remplir pour remédier auxdites pannes ou anomalies.

3. Dispositif d'aide au diagnostic suivant l'une des revendications 1 ou 2, caractérisé en ce que lesdits moyens (3) de stockage d'informations correspondant aux procédures de dépannage de la machine sont constitués par une zone de mémoire d'une calculatrice de poche (1) et en ce que lesdits moyens de comparaison (10) sont constitués par le microprocesseur de la calculatrice de poche (1).

4. Dispositif d'aide au diagnostic suivant l'une des revendications 1 à 3, caractérisé en ce qu'il comporte en outre des moyens (2) de stockage d'informations relatives à un programme de déroulement des opérations de test.

5. Dispositif d'aide au diagnostic suivant l'une des revendications 1 à 4, caractérisé en ce que lesdits moyens (2) de stockage d'informations relatives audit programme sont constitués par une zone de mémoire de la calculatrice de poche.

6. Dispositif suivant l'une quelconque des revendications 1 à 5, caractérisé en ce que lesdites zones de mémoire pour le stockage des informations correspondant aux procédures de dépannage de la machine et pour le stockage des informations relatives au programme sont des blocs-mémoires programmables (3,2) enfichés dans la calculatrice.

7. Dispositif d'aide au diagnostic suivant l'une des revendications 3 à 6, caractérisé en ce que les moyens pour transmettre au dispositif de stockage des informations correspondant aux procédures de dépannage de la machine sont constitués par un circuit d'interface d'entrée-sortie (11) intégré à la calculatrice (1).

8. Dispositif d'aide au diagnostic suivant l'une des revendications 1 à 7, caractérisé en ce qu'il est en outre prévu un module adaptateur (6) connecté entre le dispositif et la machine afin d'adapter les niveaux de tension sur les bornes de test de la machine aux niveaux de signaux d'entrée-sortie du dispositif.

9. Dispositif d'aide au diagnostic suivant la revendication 8, dans lequel l'adaptateur (6) comporte des circuits de couplage interposés dans les voies de transmission des données de mesure de la machine vers le dispositif et de transmission de données d'interrogation du dispositif vers la machine, caractérisé en ce qu'un interrupteur électronique (31, 32) commandé par le niveau de tension d'au moins une borne de test d'un automate est connecté à au moins une sortie d'interrogation de l'adaptateur pour modifier le niveau de tension de cette sortie en fonction du niveau de tension de ladite borne de test de la machine.

# FIG.1

FIG. 2

# FIG. 3

EP 0 449 730 A1

# RAPPORT DE RECHERCHE EUROPEENNE

Office européen
des brevets

Numero de la demande

EP 91 40 0832

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5 ) |
|---|---|---|---|
| Y | ELEKTRONIK.<br>vol. 30, no. 25, décembre 1981, MUNCHEN DE<br>pages 89 - 92; Prof.Dr.-Ing. W.Lawrenz:<br>"Fehlerdiagnose für Industriesteuerungen"<br>* le document en entier * | 1 | G05B19/05 |
| A | | 2-5, 7 | |
| | --- | | |
| Y | CONTROL ENGINEERING.<br>vol. 30, no. 1, janvier 1983, Illinois,USA<br>pages 156 - 162; ART PIETRZYK:<br>"Machine Diagnostics Add To PC Productivity<br>Gains"<br>* le document en entier * | 1 | |
| A | | 2, 4 | |
| | --- | | |
| A | SIEMENS POWER ENGINEERING.<br>vol. 6, no. 3, juin 1984, PASSAU DE<br>pages 147 - 148; C.Bräuer,G.Leberzammer:<br>"The 335 Diagnostic Unit-The Portable Aid for<br>Programmable Controllers"<br>* le document en entier * | 1, 2 | DOMAINES TECHNIQUES RECHERCHES (Int. Cl.5 ) |
| | --- | | |
| A | FR-A-2522424 (ROBERT BOSCH)<br>* page 6, ligne 13 - page 7, ligne 8 *<br>* figures 1, 2 * | 1, 7 | G05B |
| | --- | | |
| A | DE-A-3428215 (SIEMENS)<br>* page 6, ligne 19 - page 8, ligne 15 *<br>* figure 1 * | 1, 8, 9 | |
| | ----- | | |

Le présent rapport a été établi pour toutes les revendications

| Lieu de la recherche | Date d'achèvement de la recherche | Examinateur |
|---|---|---|
| LA HAYE | 04 JUILLET 1991 | NETTESHEIM J. |

CATEGORIE DES DOCUMENTS CITES

X : particulièrement pertinent à lui seul
Y : particulièrement pertinent en combinaison avec un
    autre document de la même catégorie
A : arrière-plan technologique
O : divulgation non-écrite
P : document intercalaire

T : théorie ou principe à la base de l'invention
E : document de brevet antérieur, mais publié à la
    date de dépôt ou après cette date
D : cité dans la demande
L : cité pour d'autres raisons
............................................................
& : membre de la même famille, document correspondant

EPO FORM 1503 03.82 (P0402)